# EUROPEAN PATENT APPLICATION

(11) **EP 4 507 160 A1**
(43) Date of publication of application: **12.02.2025**
(21) Application number: 23920307.8
(22) Date of filing: 16.06.2023
(51) Int. Cl.: H02J 7/00

(54) **ADAPTER, CHARGING SYSTEM AND CHARGING METHOD**

(71) Applicant: Huawei Digital Power Technologies Co., Ltd., Shenzhen, Guangdong 518043 (CN)
(72) Inventor: SUN, Chenghao, Shenzhen, Guangdong 518043 (CN); REN, Jie, Shenzhen, Guangdong 518043 (CN); LI, Yuechao, Shenzhen, Guangdong 518043 (CN); BAI, Xin, Shenzhen, Guangdong 518043 (CN)
(74) Representative: Gill Jennings & Every LLP
(86) International application number: PCT/CN2023/100682
(87) International publication number: WO 2024/254846

(57) **Abstract**

Embodiments of this application provide an adapter, a charging system, and a charging method. The adapter includes a charging module, and a first housing and a second housing that are rotatably connected. The charging module includes a rectifier unit and a wireless charging unit. The wireless charging unit includes a transmit end coil assembly and a receive end coil assembly. The rectifier unit and the transmit end coil assembly are located in the first housing, and the receive end coil assembly is located in the second housing. The rectifier unit is configured to: receive an alternating current from an external power supply, convert the alternating current into a first direct current, and transmit the first direct current to the transmit end coil assembly. When the adapter is in a folded state, the transmit end coil assembly can transmit, to the receive end coil assembly through electromagnetic induction, the first direct current output by the rectifier unit, and further supply the first direct current to a load. The adapter provided in embodiments of this application can meet a requirement for high charging power while occupying small space.

## Description

### TECHNICAL FIELD

Embodiments of this application relate to the field of charging technologies, and more specifically, to an adapter, a charging system, and a charging method.

### BACKGROUND

As a power supply conversion device for small portable electronic devices and electronic appliances, an adapter is widely used in electronic devices such as a smartphone, a tablet computer, and a notebook computer. As charging power of the adapter increases, the adapter needs more electronic parts and components, for adaptation, that can withstand high power and implement high-precision control. Correspondingly, a size of the adapter increases.

However, in actual use, the adapter is generally plugged into a jack of a socket. Currently, sockets are mostly multi-jack or dual-row sockets, and a distance between adj acent jacks is short. Therefore, an adapter with a large size easily blocks an unused jack on the socket when being plugged, thereby reducing jack utilization of the socket, and resulting in low convenience of using the adapter. In addition, because a user has an increasingly high requirement for portability of the electronic device, the adapter used as an auxiliary device also has a trend of miniaturization.

Therefore, an adapter that can meet a requirement for high charging power while occupying small space needs to be provided.

### SUMMARY

Embodiments of this application provide an adapter, a charging system, and a charging method. The adapter can meet a requirement for high charging power while occupying small space.

According to a first aspect, an adapter is provided. The adapter includes a first housing, a second housing, and a charging module. The first housing and the second housing are rotatably connected. The charging module includes a rectifier unit and a wireless charging unit. The rectifier unit is disposed in the first housing. The wireless charging unit includes a transmit end coil assembly and a receive end coil assembly. The transmit end coil assembly is disposed in the first housing. The transmit end coil assembly is electrically connected to an output end of the rectifier unit. The receive end coil assembly is disposed in the second housing. The rectifier unit is configured to: receive an alternating current from an external power supply, convert the alternating current into a first direct current, and transmit the first direct current to the transmit end coil assembly. The transmit end coil assembly is configured to convert the first direct current into an electromagnetic wave. The receive end coil assembly is configured to: convert the electromagnetic wave into a second direct current and transmit the second direct current to a load.

It may be understood that the first housing and the second housing are rotatably connected, so that the adapter has a folded state and an unfolded state. When the adapter changes between the folded state and the unfolded state, the first housing and the second housing may have a first combined state.

That the first housing and the second housing are in the first combined state may mean that the adapter is in the folded state, and the transmit end coil assembly located in the first housing and the receive end coil assembly located in the second housing can be coupled through electromagnetic induction. In this way, a coupled electromagnetic field may be generated in spacing space between the transmit end coil assembly and the receive end coil assembly, the transmit end coil assembly may transfer, based on the coupled electromagnetic field, a direct current output by the rectifier unit in the first housing to the receive end coil assembly in the second housing in a wireless transmission manner, and then the direct current is transmitted to the load.

It may be further understood that, in this embodiment of this application, the adapter may transmit the direct current to the load through a power cable, to charge the load. In other words, the receive end coil assembly transmits the direct current to the load in a wired transmission manner.

According to the adapter provided in this embodiment of this application, the transmit end coil assembly and the receive end coil assembly of the wireless charging unit are disposed respectively in the two housings that are rotatably connected, so that the adapter can transmit, in the folded state in the wireless transmission manner, the direct current output by the rectifier unit to the receive end coil assembly, to charge the load via the receive end coil assembly. This can reduce space occupied when the adapter is used, thereby facilitating miniaturization of the adapter. When the adapter is plugged into a socket, an unused jack is not blocked by the adapter due to small occupied space, so as to ensure jack utilization of the socket, thereby improving convenience of using the adapter. In addition, the transmit end coil assembly and the receive end coil assembly are independently disposed in the two housings respectively, so that impact, caused by housing folding, on sizes of the transmit end coil assembly and the receive end coil assembly can be avoided, to ensure output power of the adapter. This helps the adapter to meet a requirement for high charging power.

With reference to the first aspect, in some implementations of the first aspect, the charging module further includes a buck direct current-direct current DC-DC conversion circuit, and an input end of the buck DC-DC conversion circuit is electrically connected to the output end of the rectifier unit. The buck DC-DC conversion circuit is configured to: convert the first direct current output by the rectifier unit into a third direct current, and transmit the third direct current to the load, where a voltage of the third direct current is less than a voltage of the first direct current.

It may be understood that when the adapter changes between the folded state and the unfolded state, the first housing and the second housing may alternatively have a second combined state.

That the first housing and the second housing are in the second combined state may mean that the adapter is in the folded state or the unfolded state, and a coupled electromagnetic field cannot be generated in spacing space between the transmit end coil assembly located in the first housing and the receive end coil assembly located in the second housing. In other words, the transmit end coil assembly and the receive end coil assembly cannot be coupled through electromagnetic induction. For example, when the adapter is in the folded state or the unfolded state, the transmit end coil assembly and the receive end coil assembly are not disposed facing each other; or due to a large spacing distance between the transmit end coil assembly and the receive end coil assembly, the transmit end coil assembly and the receive end coil assembly may not be coupled through electromagnetic induction. In this way, the adapter cannot transmit, in the wireless transmission manner, the direct current output by the rectifier unit to the receive end coil assembly, and therefore cannot charge the load via the receive end coil assembly.

According to the adapter provided in this embodiment of this application, the buck DC-DC conversion circuit is disposed. When the adapter cannot charge the load via the receive end coil assembly, the adapter can use the buck DC-DC conversion circuit to further convert the direct current output by the rectifier unit into the direct current applicable to the load, and transmit the direct current to the load in a wired transmission manner, so as to charge the load, thereby helping ensure reliability of using the adapter. In addition, the adapter can also transmit, in the folded state via both the receive end coil assembly and the buck DC-DC conversion circuit, the direct current output by the rectifier unit to the load, so that charging power of the adapter can be increased, and the adapter can meet a requirement for high charging power.

With reference to the first aspect, in some implementations of the first aspect, the buck DC-DC conversion circuit is disposed in the second housing. The adapter further includes a first connection line. A first end of the first connection line is located in the first housing, and the first end of the first connection line is electrically connected to the output end of the rectifier unit. A second end of the first connection line is located in the second housing, and the second end of the first connection line is electrically connected to the input end of the buck DC-DC conversion circuit.

It may be understood that the first connection line may be a connection line that can transmit an electrical signal. For example, the first connection line may be a cable.

According to the adapter provided in this embodiment of this application, the buck DC-DC conversion circuit may be disposed in the second housing together with the receive end coil assembly, and is electrically connected to the rectifier unit in the first housing through the first connection line, to receive the direct current output by the rectifier unit. This can make full use of space in the second housing, and a structure design is simple and compact, thereby facilitating the miniaturization of the adapter.

With reference to the first aspect, in some implementations of the first aspect, the buck DC-DC conversion circuit is disposed in the first housing. The adapter further includes a second connection line. A first end of the second connection line is located in the first housing, and the first end of the second connection line is electrically connected to an output end of the buck DC-DC conversion circuit. A second end of the second connection line is located in the second housing, and the second end of the second connection line is configured to electrically connect to the load.

It may be understood that the second connection line may be a connection line that can transmit an electrical signal. For example, the second connection line may be a cable.

According to the adapter provided in this embodiment of this application, the buck DC-DC conversion circuit may be disposed in the first housing together with the transmit end coil assembly, and is electrically connected to the load through the second connection line. This can make full use of space in the first housing, and a structure design is simple and compact, thereby facilitating the miniaturization of the adapter.

With reference to the first aspect, in some implementations of the first aspect, the transmit end coil assembly includes a transmit end coil and a transmit end magnetic core, the buck DC-DC conversion circuit includes a secondary coil. The transmit end coil and the secondary coil are wound around the transmit end magnetic core, the transmit end coil is electrically connected to the output end of the rectifier unit, and the secondary coil is electrically connected to the first end of the second connection line. The transmit end coil and the secondary coil are configured to: step down, through electromagnetic induction, the voltage of the first direct current output by the rectifier unit, to obtain the third direct current, and transmit the third direct current to the load.

According to the adapter provided in this embodiment of this application, the transmit end coil is used as a primary coil in the buck DC-DC conversion circuit, so that the transmit end coil is coupled to the secondary coil in the buck DC-DC conversion circuit via the transmit end magnetic core, to form a transformer in the buck DC-DC conversion circuit. In this way, no independent primary coil may be disposed in the buck DC-DC conversion circuit. This helps reduce a quantity of electronic parts and components in the adapter, and further facilitates the miniaturization of the adapter.

With reference to the first aspect, in some implementations of the first aspect, the adapter further includes a connection mechanism. The connection mechanism is located between the first housing and the second housing, and the connection mechanism is rotatably connected to the first housing and the second housing separately. A transformer unit includes a primary coil, the secondary coil, and a first magnetic core, the first magnetic core is disposed at the connection mechanism, the primary coil and the secondary coil are wound around the first magnetic core, the primary coil is electrically connected to the output end of the rectifier unit, and the secondary coil is configured to electrically connect to the load. The primary coil and the secondary coil are configured to: step down, through electromagnetic induction, the voltage of the first direct current output by the rectifier unit to obtain the third direct current, and transmit the third direct current to the load.

It may be understood that the first housing and the second housing may be rotatably connected through the connection mechanism, to perform switching between the first combined state and the second combined state. The connection mechanism may be, for example, a rotating shaft or a cable.

According to the adapter provided in this embodiment of this application, the magnetic core in the buck DC-DC conversion circuit is disposed at the connection mechanism, to make full use of space at the connection mechanism and reduce space occupied by the magnetic core in the first housing or the second housing. Therefore, the first housing or the second housing can accommodate more electronic parts and components, thereby helping increase the charging power of the adapter.

With reference to the first aspect, in some implementations of the first aspect, the adapter further includes an input interface and an output interface. The input interface is disposed on the first housing, the input interface is electrically connected to an input end of the rectifier unit, and the input interface is configured to electrically connect to the external power supply. The output interface is disposed on the second housing, the output interface is electrically connected to the receive end coil assembly, and the output interface is configured to electrically connect to the load.

The input interface may be, for example, a plug interface, and the plug interface may be plugged into the socket, so as to obtain, through the socket, an alternating current input by the external power supply. The output interface may be electrically connected to the load through the power cable.

According to the adapter provided in this embodiment of this application, the input interface and the rectifier unit are disposed in a same housing, and the receive end coil assembly and the output interface are disposed in a same housing, so that complexity of line connections between the input interface and the rectifier unit, and between the receive end coil assembly and the output interface can be reduced, to facilitate design of a circuit structure in the adapter.

With reference to the first aspect, in some implementations of the first aspect, the rectifier unit includes a rectifier conversion circuit and a first DC-DC conversion circuit. The output end of the rectifier unit is electrically connected to an input end of the first DC-DC conversion circuit, and an output end of the first DC-DC conversion circuit is electrically connected to the transmit end coil assembly. The rectifier conversion circuit is configured to: receive the alternating current from the external power supply, convert the alternating current into a fourth direct current, and transmit the fourth direct current to the first DC-DC conversion circuit. The first DC-DC conversion circuit is configured to: convert the fourth direct current into the first direct current, and transmit the first direct current to the transmit end coil assembly.

Optionally, the first DC-DC conversion circuit may be a buck/boost circuit, a boost circuit, or a buck circuit.

According to the adapter provided in this embodiment of this application, power conversion and rectification may be performed, through the rectifier conversion circuit and the first DC-DC conversion circuit, on the alternating current input by the external power supply, so that a current and a voltage that are of the first direct current and that are output to the transmit end coil assembly can be stabler and smoother.

With reference to the first aspect, in some implementations of the first aspect, the first DC-DC conversion circuit includes a plurality of switches, and the wireless charging unit further includes a wireless charging controller. The wireless charging controller is disposed in the first housing. The wireless charging controller is configured to: receive a feedback signal sent by the receive end coil assembly, where the feedback signal indicates charging information of the load; and determine a drive signal based on the feedback signal, where the drive signal is used to control turning-on and turning-off of the plurality of switches, so that the first DC-DC conversion circuit outputs the first direct current based on the charging information.

It may be understood that the charging information of the load may include requirements of the load for a charging voltage and a charging current when the load is charged. Outputting the first direct current based on the charging information may mean that both a peak voltage/average voltage and a peak current/average current corresponding to a case in which the first direct current is used to charge the load meet the requirements of the load for the charging voltage and the charging current when the load is charged.

According to the adapter provided in this embodiment of this application, the wireless charging controller may adjust, based on the charging information fed back by the receive end coil assembly, the first direct current output by the first DC-DC conversion circuit, to meet a charging requirement of the load, thereby improving reliability of using the adapter.

According to a second aspect, a charging system is provided. The charging system includes an adapter and a load. The adapter includes a first housing, a second housing, and a charging module. The first housing and the second housing are rotatably connected. The charging module includes a rectifier unit and a wireless charging unit. The rectifier unit is disposed in the first housing. The wireless charging unit includes a transmit end coil assembly and a receive end coil assembly. The transmit end coil assembly is disposed in the first housing. The transmit end coil assembly is electrically connected to an output end of the rectifier unit. The receive end coil assembly is disposed in the second housing. The receive end coil assembly is electrically connected to the load. The rectifier unit is configured to: receive an alternating current from an external power supply, convert the alternating current into a first direct current, and transmit the first direct current to the transmit end coil assembly. The transmit end coil assembly is configured to convert the first direct current into an electromagnetic wave. The receive end coil assembly is configured to: convert the electromagnetic wave into a second direct current and transmit the second direct current to the load.

With reference to the second aspect, in some implementations of the second aspect, the charging module further includes a buck direct current-direct current DC-DC conversion circuit, an input end of the buck DC-DC conversion circuit is electrically connected to the output end of the rectifier unit, and an output end of the buck DC-DC conversion circuit is electrically connected to the load. The buck DC-DC conversion circuit is configured to: convert the first direct current output by the rectifier unit into a third direct current, and transmit the third direct current to the load, where a voltage of the third direct current is less than a voltage of the first direct current.

With reference to the second aspect, in some implementations of the second aspect, the buck DC-DC conversion circuit is disposed in the second housing. The adapter further includes a first connection line. A first end of the first connection line is located in the first housing, and the first end of the first connection line is electrically connected to the output end of the rectifier unit. A second end of the first connection line is located in the second housing, and the second end of the first connection line is electrically connected to the input end of the buck DC-DC conversion circuit.

With reference to the second aspect, in some implementations of the second aspect, the buck DC-DC conversion circuit is disposed in the first housing. The adapter further includes a second connection line. A first end of the second connection line is located in the first housing, and the first end of the second connection line is electrically connected to an output end of the buck DC-DC conversion circuit. A second end of the second connection line is located in the second housing, and the second end of the second connection line is electrically connected to the load.

With reference to the second aspect, in some implementations of the second aspect, the transmit end coil assembly includes a transmit end coil and a transmit end magnetic core, the buck DC-DC conversion circuit includes a secondary coil. The transmit end coil and the secondary coil are wound around the transmit end magnetic core, the transmit end coil is electrically connected to the output end of the rectifier unit, and the secondary coil is electrically connected to the first end of the second connection line. The transmit end coil and the secondary coil are configured to: step down, through electromagnetic induction, the voltage of the first direct current output by the rectifier unit, to obtain the third direct current, and transmit the third direct current to the load.

With reference to the second aspect, in some implementations of the second aspect, the adapter further includes a connection mechanism. The connection mechanism is located between the first housing and the second housing, and the connection mechanism is rotatably connected to the first housing and the second housing separately. The buck DC-DC conversion circuit includes a primary coil, the secondary coil, and a first magnetic core, the first magnetic core is disposed at the connection mechanism, the primary coil and the secondary coil are wound around the first magnetic core, the primary coil is electrically connected to the output end of the rectifier unit, and the secondary coil is electrically connected to the load. The primary coil and the secondary coil are configured to: step down, through electromagnetic induction, the voltage of the first direct current output by the rectifier unit, to obtain the third direct current, and transmit the third direct current to the load.

With reference to the second aspect, in some implementations of the second aspect, the adapter further includes an input interface and an output interface. The input interface is disposed on the first housing, the input interface is electrically connected to the input end of the rectifier unit, and the input interface is configured to electrically connect to the external power supply. The output interface is disposed on the second housing, and the output interface is electrically connected to the receive end coil assembly and the load.

With reference to the second aspect, in some implementations of the second aspect, the rectifier unit includes a rectifier conversion circuit and a first DC-DC conversion circuit. The output end of the rectifier unit is electrically connected to an input end of the first DC-DC conversion circuit, and an output end of the first DC-DC conversion circuit is electrically connected to the transmit end coil assembly. The rectifier conversion circuit is configured to: receive the alternating current from the external power supply, convert the alternating current into a fourth direct current, and transmit the fourth direct current to the first DC-DC conversion circuit. The first DC-DC conversion circuit is configured to: convert the fourth direct current into the first direct current, and transmit the first direct current to the transmit end coil assembly.

With reference to the second aspect, in some implementations of the second aspect, the first DC-DC conversion circuit includes a plurality of switches, and the wireless charging unit further includes a wireless charging controller. The wireless charging controller is disposed in the first housing. The wireless charging controller is configured to: receive a feedback signal sent by the receive end coil assembly, where the feedback signal indicates charging information of the load; and determine a drive signal based on the feedback signal, where the drive signal is used to control turning-on and turning-off of the plurality of switches, so that the first DC-DC conversion circuit outputs the first direct current based on the charging information.

According to a third aspect, a charging method is provided, applied to an adapter. The adapter includes a first housing, a second housing, and a charging module. The charging module includes a rectifier unit and a wireless charging unit, and the wireless charging unit includes a transmit end coil assembly and a receive end coil assembly. The first housing and the second housing are rotatably connected, the rectifier unit and the transmit end coil assembly are disposed in the first housing, an output end of the rectifier unit is electrically connected to the transmit end coil assembly, and the receive end coil assembly is disposed in the second housing.

The charging method includes: The rectifier unit receives an alternating current from an external power supply, converts the alternating current into a first direct current, and transmits the first direct current to the transmit end coil assembly; and the transmit end coil assembly converts the first direct current into an electromagnetic wave, and the receive end coil assembly converts the electromagnetic wave into a second direct current, and transmits the second direct current to a load.

According to the charging method provided in this embodiment of this application, the adapter transmits, in a folded state in a wireless transmission manner via the transmit end coil assembly and the receive end coil assembly that are disposed in the two housings respectively, a direct current output by the rectifier unit to the receive end coil assembly via the transmit end coil assembly, to charge the load via the receive end coil assembly. This can reduce space occupied when the adapter is used, thereby facilitating miniaturization of the adapter. When the adapter is plugged into a socket, an unused jack is not blocked by the adapter due to small occupied space, so as to ensure jack utilization of the socket, thereby improving convenience of using the adapter. In addition, the transmit end coil assembly and the receive end coil assembly are independently disposed in the two housings respectively, so that impact, caused by housing folding, on sizes of the transmit end coil assembly and the receive end coil assembly can be avoided, to ensure output power of the adapter. This helps the adapter to meet a requirement for high charging power.

With reference to the third aspect, in some implementations of the third aspect, the charging module further includes a buck direct current-direct current DC-DC conversion circuit, and an input end of the buck DC-DC conversion circuit is electrically connected to the output end of the rectifier unit.

The charging method further includes: The buck DC-DC conversion circuit converts the first direct current output by the rectifier unit into a third direct current, and transmits the third direct current to the load, where a voltage of the third direct current is less than a voltage of the first direct current.

With reference to the third aspect, in some implementations of the third aspect, the rectifier unit includes a rectifier conversion circuit and a first DC-DC conversion circuit, the output end of the rectifier unit is electrically connected to an input end of the first DC-DC conversion circuit, and an output end of the first DC-DC conversion circuit is electrically connected to the transmit end coil assembly.

That the rectifier unit receives an alternating current from an external power supply, converts the alternating current into a first direct current, and transmits the first direct current to the transmit end coil assembly includes: The rectifier conversion circuit receives the alternating current from the external power supply, converts the alternating current into a fourth direct current, and transmits the fourth direct current to the first DC-DC conversion circuit; and the first DC-DC conversion circuit converts the fourth direct current into the first direct current, and transmits the first direct current to the transmit end coil assembly.

With reference to the third aspect, in some implementations of the third aspect, the first DC-DC conversion circuit includes a plurality of switches, the wireless charging unit further includes a wireless charging controller, and the wireless charging controller is disposed in the first housing.

The charging method further includes: The wireless charging controller receives a feedback signal sent by the receive end coil assembly, where the feedback signal indicates charging information of the load; and the wireless charging controller determines a drive signal based on the feedback signal, where the drive signal is used to control turning-on and turning-off of the plurality of switches, so that the first DC-DC conversion circuit outputs the first direct current based on the charging information.

For beneficial effects of the second aspect and the third aspect, refer to the related descriptions of the first aspect. Details are not described herein again.

### BRIEF DESCRIPTION OF DRAWINGS

FIG. 1 is a diagram of a structure of a charging system according to an embodiment of this application;
FIG. 2 is a diagram of an architecture of a connection between an adapter and a socket according to an embodiment of this application;
FIG. 3 is a diagram of an internal structure of an adapter according to an embodiment of this application;
FIG. 4 is a diagram of a product form of an adapter corresponding to a case in which a first housing and a second housing are in a first combined state according to an embodiment of this application;
FIG. 5 is a diagram of a product form of an adapter corresponding to a case in which a first housing and a second housing are in a second combined state according to an embodiment of this application;
FIG. 6 is a diagram of a product form of an adapter corresponding to a case in which a first housing and a second housing are in a second combined state according to an embodiment of this application;
FIG. 7 is a diagram of a specific example of a charging module inside an adapter according to an embodiment of this application;
FIG. 8 is a diagram of a specific example of a charging module inside an adapter according to an embodiment of this application;
FIG. 9 is a diagram of a specific example of a charging module inside an adapter according to an embodiment of this application;
FIG. 10 is a diagram of a product form of an adapter according to an embodiment of this application;
FIG. 11 is a diagram of a specific example of a charging module inside an adapter according to an embodiment of this application;
FIG. 12 is a diagram of a product form of an adapter according to an embodiment of this application;
FIG. 13 is a diagram of a specific example of a charging module inside an adapter according to an embodiment of this application;
FIG. 14 is a diagram of a specific example of a charging module inside an adapter according to an embodiment of this application;
FIG. 15 is a diagram of a product form of an adapter according to an embodiment of this application;
FIG. 16 is a diagram of a specific example of a first DC-DC conversion circuit according to an embodiment of this application;
FIG. 17 is a diagram of a specific example of a first DC-DC conversion circuit according to an embodiment of this application;
FIG. 18 is a diagram of a specific example of a first DC-DC conversion circuit according to an embodiment of this application;
FIG. 19 is a diagram of a specific example of a first DC-DC conversion circuit according to an embodiment of this application;
FIG. 20 is a schematic flowchart of a charging method according to an embodiment of this application;
FIG. 21 is a diagram of a structure of a charging system according to an embodiment of this application; and
FIG. 22 is a diagram of a structure of another charging system according to an embodiment of this application.

### DESCRIPTION OF EMBODIMENTS

For ease of understanding, terms in embodiments of this application are first described.

An adapter (adapter) may be an apparatus that is configured to supply power to an electronic device and that has a voltage conversion function. The adapter may also be referred to as a charging head, a charger (charger), a switch power supply (switch power supply), or a power converter (power converter).

For ease of understanding embodiments of this application, the following descriptions are provided before embodiments of this application are described.

In the descriptions of embodiments of this application, unless otherwise specified, a "connection" may be understood in a broad sense. For example, the "connection" may be a fixed connection, a detachable connection, or an integrated connection. The "connection" may be a direct connection, or may be an indirect connection through an intermediate medium. An "electrical connection" may be a manner of an electrical connection for implementing signal transmission. An electrical connection between two electrical elements may be a manner of a direct electrical connection or an indirect electrical connection between the two electrical elements to implement signal transmission. For example, that A is electrically connected to B may be understood as that A is directly electrically connected to B, or may be understood as that A is indirectly electrically connected to B via one or more other electrical elements.

The following describes technical solutions of this application with reference to accompanying drawings.

To facilitate understanding of an adapter provided in embodiments of this application, the following first describes an application scenario for the adapter.

The adapter provided in embodiments of this application may be applied to a charging system. In the charging system, the adapter may convert an input alternating current into a stable direct current charging voltage required by a load, and charge the load by using the direct current charging voltage.

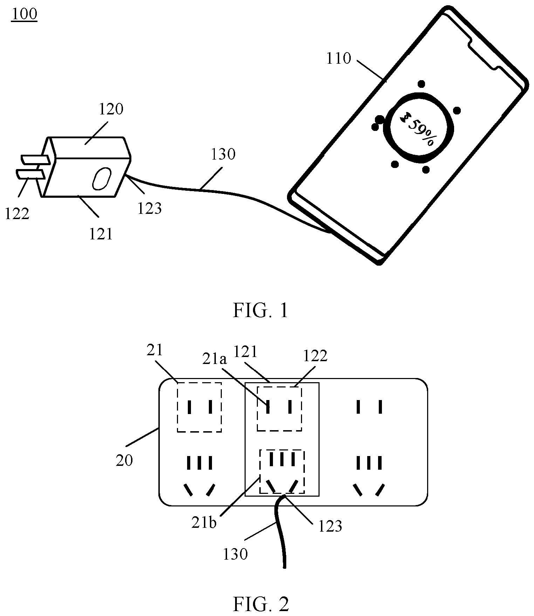

FIG. 1 shows an example of a diagram of a structure of a charging system 100.

Refer to FIG. 1. The charging system 100 may include a load 110 and an adapter 120.

The load 110 may be a handheld device, a vehicle-mounted device, a wearable device, a computing device, or another processing device connected to a wireless modem, for example, a cellular phone (cellular phone), a smartphone (smartphone), a tablet computer, a notebook computer, a laptop computer (laptop computer), a video camera, a video recorder, a camera, a smart watch (smart watch), or a smart wristband (smart wristband).

The adapter 120 may include a housing 121, an input interface 122, an output interface 123, and a charging module (not shown in the figure). The input interface 122 and the output interface 123 may be disposed on the housing 121, and the charging module may be disposed in accommodation space of the housing 121.

The input interface 122 may be configured to electrically connect to an external power supply, to obtain an input alternating current. The input interface 122 is generally a plug interface, and the plug interface is configured to be plugged into a socket, to obtain, via the socket, the alternating current input by the external power supply.

It may be understood that, in this embodiment of this application, the external power supply may be a power grid, and an alternating current input by the power grid may be referred to as a mains supply.

The charging module may be configured to convert the alternating current obtained through the input interface 122 into a stable direct current. The charging module may generally include an alternating current-direct current (alternating current-direct current, AC-DC) conversion circuit and a direct current-direct current (direct current-direct current, DC-DC) conversion circuit that are electrically connected. The AC-DC conversion circuit may be configured to: convert the alternating current obtained through the input interface 122 into a direct current, and output the direct current to the DC-DC conversion circuit. The DC-DC conversion circuit may be configured to: further convert the direct current output by the AC-DC conversion circuit into a direct current applicable to the load 110, and transmit the direct current to the output interface 123.

The output interface 123 may be configured to electrically connect to the load 110, to transmit, to the load 110, the direct current obtained through conversion by the DC-DC conversion circuit. For example, the adapter 120 may convert an input "220 V alternating current" into a "5 V 1 A direct current", to charge the load 110. Refer to FIG. 1. In an example, the output interface 123 may output the direct current to the load 110 through a power cable 130.

As described in the foregoing background, in actual use, to meet a requirement for high charging power, more electronic parts and components that can withstand high power and implement high-precision control are required in the housing 121 of the adapter 120 for adaptation, and a size of the housing 121 increases accordingly.

However, currently, sockets are mostly multi-jack sockets or dual-row sockets, and an adapter with a large size easily blocks an unused jack on a socket when being used, resulting in a decrease in jack utilization of the socket.

FIG. 2 shows an example of a diagram of an architecture in which the adapter 120 is connected to a socket 20.

Refer to FIG. 2. The socket 20 is a dual-row socket, the socket 20 includes a plurality of jack groups 21, and each jack group 21 may be configured to be plugged through the input interface 122 of the adapter 120. Because a distance between adjacent jack groups 21 is short, when the adapter 120 is plugged into a jack group 21a, the housing 121 with a large size blocks a jack group 21b under the jack group 21a. As a result, the jack group 21b is unavailable, jack utilization of the socket 20 is low, and convenience of using the adapter 120 is low. In addition, because a user has an increasingly high requirement for portability of the load 110, the adapter 120 used as an auxiliary device also has a trend of miniaturization.

Therefore, an adapter that can meet a requirement for high charging power while occupying small space needs to be provided.

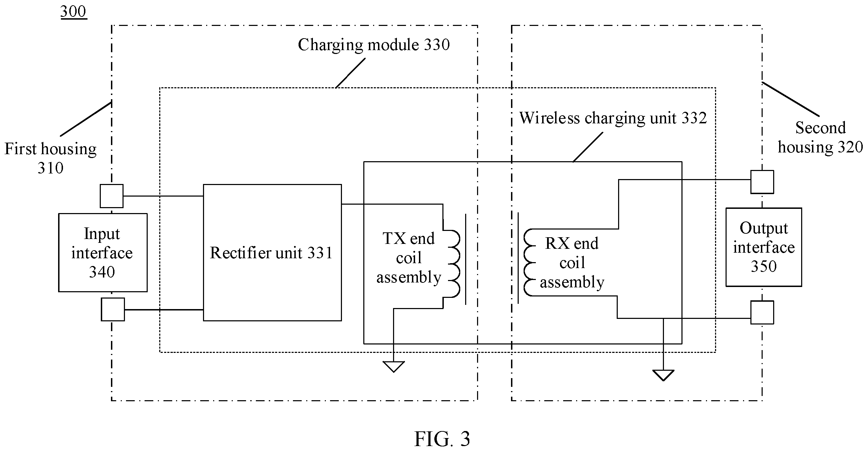

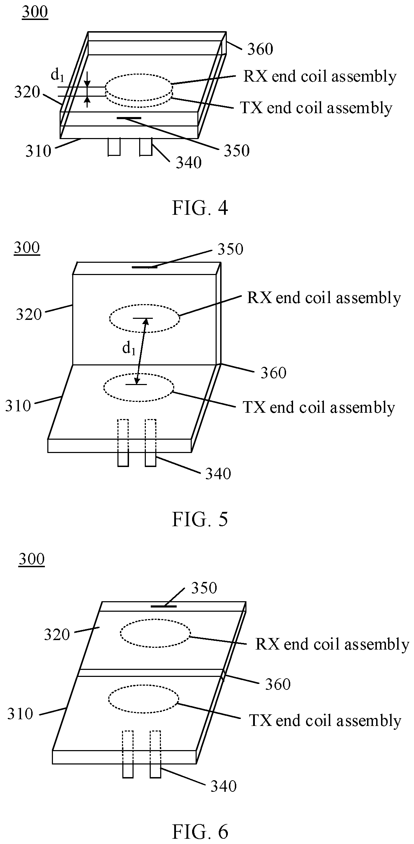

FIG. 3 is a diagram of an internal structure of an adapter 300 according to an embodiment of this application. FIG. 4 to FIG. 6 are diagrams of possible product forms of the adapter 300 according to this embodiment of this application. It should be understood that the adapter 300 provided in this embodiment of this application may be the adapter 120.

Refer to FIG. 3. The adapter 300 may include a first housing 310, a second housing 320, and a charging module 330.

Both the first housing 310 and the second housing 320 may be cuboids, cubes, cylinders, or the like. A thickness of the first housing 310 and a thickness of the second housing 320 may be less than or equal to 15 mm.

The charging module 330 may include a rectifier unit 331 and a wireless charging unit 332. The wireless charging unit 332 may include a transmit (transmit, TX) end coil assembly and a receive (receive, RX) end coil assembly. The rectifier unit 331 and the TX end coil assembly may be disposed in internal space of the first housing 310, and an output end of the rectifier unit 331 may be electrically connected to the TX end coil assembly. For example, the output end of the rectifier unit 331 may be electrically connected to a first end of the TX end coil assembly (namely, an upper end of the TX end coil assembly shown in FIG. 3), and a second end of the TX end coil assembly (namely, a lower end of the TX end coil assembly shown in FIG. 3) may be grounded. The RX end coil assembly may be disposed in internal space of the second housing 320.

The rectifier unit 332 may be configured to: receive an alternating current from an external power supply, convert the alternating current into a first direct current, and transmit the first direct current to the TX end coil assembly. The TX end coil assembly may be configured to convert the first direct current output by the rectifier unit 332 into an electromagnetic wave, and the RX end coil assembly may be configured to: convert the electromagnetic wave into a second direct current and then transmit the second direct current to a load, to charge the load.

During specific implementation, the first housing 310 and the second housing 320 may be rotatably connected, so that the adapter 300 has a folded state and an unfolded state. When the adapter changes between the folded state and the unfolded state, the first housing 310 and the second housing 320 may have a first combined state and a second combined state.

In some embodiments, with reference to FIG. 4 and FIG. 5, the adapter 300 may further include a connection mechanism 360. The connection mechanism 360 may be located between the first housing 310 and the second housing 320, and is rotatably connected to the first housing 310 and the second housing 320 separately. Under the action of the connection mechanism 360, the first housing 310 and the second housing 320 may approach each other or be far away from each other, so that the adapter 300 is folded or unfolded, and the first housing 310 and the second housing 320 have the first combined state and the second combined state.

For example, the connection mechanism 360 may be a rotating shaft mechanism, a cable, or another mechanism that can implement a rotating connection between the first housing 310 and the second housing 320. The following uses an example in which the connection mechanism 360 is a rotating mechanism for description.

In the adapter 300 shown in FIG. 4, the first housing 310 and the second housing 320 are in the first combined state currently. In the first combined state, the adapter 300 is folded, the TX end coil assembly located in the first housing 310 and the RX end coil assembly located in the second housing 320 may be disposed in facing alignment, a spacing distance d₁ between the TX end coil assembly and the RX end coil assembly is short, and the TX end coil assembly and the RX end coil assembly may be coupled through electromagnetic induction. In this case, a coupled electromagnetic field may be generated in spacing space between the TX end coil assembly and the RX end coil assembly, and the TX end coil assembly may transfer, based on the coupled electromagnetic field, a direct current output by the rectifier unit 331 in the first housing 310 to the RX end coil assembly in the second housing 310 in a wireless transmission manner, and then the RX end coil assembly transmits the direct current to the load.

It should be noted that, in this embodiment of this application, the adapter 300 may transmit the direct current to the load through a power cable, to charge the load. In other words, the RX end coil assembly transmits the direct current to the load in a wired transmission manner.

It should be further noted that, in this embodiment of this application, the first combined state that the first housing 310 and the second housing 320 are in may refer to a connection state between the first housing 310 and the second housing 320 corresponding to a case in which the adapter 300 is in the folded state and the TX end coil assembly and the RX end coil assembly may be coupled through electromagnetic induction.

It may be understood that, in this embodiment of this application, in the first combined state, a value of an angle between the first housing 310 and the second housing 320 needs only to meet that the adapter 300 is in the folded state and the TX end coil assembly located in the first housing 310 and the RX end coil assembly located in the second housing 320 can be coupled through electromagnetic induction. In an example, in the first combined state, an angle between the first housing 310 and the second housing 320 may be about 10°, about 20°, or about 45°.

In the adapter 300 shown in FIG. 5, the first housing 310 and the second housing 320 are in the second combined state currently. In the second combined state, the adapter 300 is folded, and an angle between the first housing 310 and the second housing 320 is about 90°. In this case, the TX end coil assembly located in the first housing 310 and the RX end coil assembly located in the second housing 320 are not disposed facing each other, and a spacing distance d₁ between the TX end coil assembly and the RX end coil assembly is large. As a result, the TX end coil assembly and the RX end coil assembly cannot be coupled through electromagnetic induction, and therefore the adapter 300 cannot charge the load via the TX end coil assembly and the RX end coil assembly.

In the adapter 300 shown in FIG. 6, the first housing 310 and the second housing 320 are in the second combined state currently. In the combined state, the adapter 300 is unfolded, and an angle between the first housing 310 and the second housing 320 is about 180°. In this case, the TX end coil assembly located in the first housing 310 and the RX end coil assembly located in the second housing 320 are not disposed facing each other. As a result, the TX end coil assembly and the RX end coil assembly cannot be coupled through electromagnetic induction, and therefore the adapter 300 cannot charge the load via the TX end coil assembly and the RX end coil assembly.

It should be noted that, in this embodiment of this application, the second combined state that the first housing 310 and the second housing 320 are in may refer to a connection state between the first housing 310 and the second housing 320 corresponding to a case in which the adapter is in the folded state or the unfolded state and the TX end coil assembly and the RX end coil assembly cannot be coupled through electromagnetic induction.

In this embodiment of this application, the TX end coil assembly and the RX end coil assembly of the wireless charging unit 332 are disposed respectively in the two housings that are rotatably connected, so that the adapter 300 can transmit, in the folded state in the wireless transmission manner, the direct current output by the rectifier unit to the receive end coil assembly, to charge the load via the RX end coil assembly. This can reduce space occupied when the adapter 300 is used, thereby facilitating miniaturization of the adapter 300. When the adapter 300 is plugged into a socket, an unused jack is not blocked by the adapter 300 due to small occupied space, so as to ensure jack utilization of the socket, thereby improving convenience of using the adapter 300.

In addition, a conventional adapter mostly uses a DC-DC conversion circuit to charge a load. In a transformer of the DC-DC conversion circuit, a primary coil and a secondary coil are generally wound around a closed magnetic core. When two housings of the adapter are folded, to ensure that the closed magnetic core can work normally, the closed magnetic core is disposed in a separate housing. As a result, a size of the closed magnetic core is reduced, and then charging power of the adapter is affected. However, in this embodiment of this application, the TX end coil assembly and the RX end coil assembly are disposed in the two housings respectively. This helps avoid impact, caused by housing folding, on sizes of magnetic cores in the TX end coil assembly and the RX end coil assembly, to ensure output power of the adapter 300. This helps the adapter 300 to meet a requirement for high charging power.

In some embodiments, with reference to FIG. 3 to FIG. 6, the adapter 300 may further include an input interface 340 and an output interface 350. The input interface 340 may be disposed on the first housing 310, and is electrically connected to an input end of the rectifier unit 332. The input interface 340 may be configured to electrically connect to the external power supply, so that the rectifier unit 332 obtains, through the input interface 340, the alternating current output by the external power supply. As shown in FIG. 4 to FIG. 6, the input interface 340 may be, for example, a plug interface. The plug interface may be configured to be plugged into and fastened to a socket, so as to obtain, through the socket, a 220 V alternating current input by an external power supply. The output interface 350 may be disposed on the second housing 320, and is electrically connected to a first end of the RX end coil assembly (namely, an upper end of the RX end coil assembly shown in FIG. 3). The output interface 350 may be configured to electrically connect to the load, so that the RX end coil assembly transmits the second direct current to the load through the output interface 350. The output interface 350 may be electrically connected to the load, for example, through a power cable.

In some other embodiments, the input interface 340 may alternatively be disposed on the second housing 320, and the output interface 350 may be disposed on the first housing 310.

It may be understood that, compared with that the input interface 340 is disposed on the second housing 320 and the output interface 310 is disposed on the first housing 310, the input interface 340 and the rectifier unit 331 are disposed together on the first housing 310, and the output interface 350 and the RX end coil assembly are disposed together on the second housing 320, so that complexity of line connections between the input interface 340 and the rectifier unit 331, and between the RX end coil assembly and the output interface 350 can be reduced, thereby facilitating design of a circuit structure in the adapter.

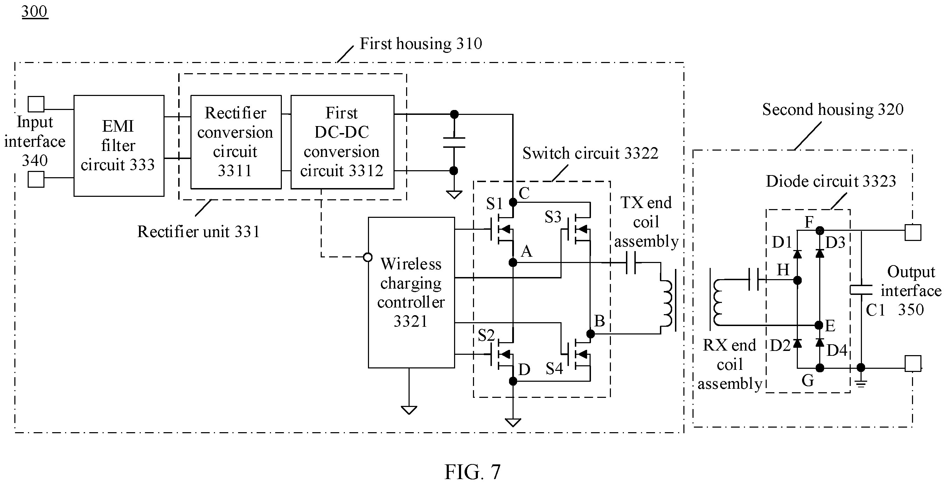

FIG. 7 is a diagram of a specific example of the charging module 330 inside the adapter 300 shown in FIG. 3 according to an embodiment of this application.

Refer to FIG. 7. In some embodiments, the rectifier unit 331 may include a rectifier conversion circuit 3311 and a first DC-DC conversion circuit 3312. An input end of the rectifier conversion circuit 3311 may serve as the input end of the rectifier unit 331, and is electrically connected to the input interface 340. An output end of the rectifier conversion circuit 3311 may be electrically connected to an input end of the first DC-DC conversion circuit 3312. An output end of the first DC-DC conversion circuit 3312 may serve as the output end of the rectifier unit 331, and is electrically connected to the first end of the TX end coil assembly (namely, an upper end of the TX end coil assembly shown in FIG. 7).

The rectifier conversion circuit 3311 may be configured to: receive the alternating current from the external power supply, convert the alternating current into a fourth direct current, and transmit the fourth direct current to the first DC-DC conversion circuit 3312. The first DC-DC conversion circuit 3322 may be configured to: convert the fourth direct current into the first direct current, and transmit the first direct current to the TX end coil assembly.

In some embodiments, the wireless charging unit 332 may further include a wireless charging controller 3321, and the first DC-DC conversion circuit 3312 may include a plurality of switches. The wireless charging controller 3321 may be disposed in the first housing 310. The wireless charging controller 3321 may be configured to receive a feedback signal sent by the RX end coil assembly, where the feedback signal may indicate charging information of the load. The wireless charging controller 3322 may be further configured to determine a drive signal based on the feedback signal, where the drive signal may be used to control turning-on and turning-off of the plurality of switches in the first DC-DC conversion circuit 3312, so that the first DC-DC conversion circuit 3312 outputs the first direct current based on the charging information.

It may be understood that the charging information of the load may include requirements of the load for a charging voltage and a charging current when the load is charged. Outputting the first direct current based on the charging information may mean that both a peak voltage/average voltage and a peak current/average current corresponding to a case in which the first direct current is used to charge the load meet the requirements of the load for the charging voltage and the charging current when the load is charged.

It may be further understood that the switch in this embodiment of this application may be one or more of a plurality of types of switching transistors such as a metal-oxide-semiconductor field-effect transistor (metal-oxide-semiconductor field-effect transistor, MOSFET), a bipolar junction transistor (bipolar junction transistor, BJT), an insulated gate bipolar transistor (insulated gate bipolar transistor, IGBT), and a silicon carbide (SiC) transistor. An encapsulation form of each switching transistor may be single-tube encapsulation, or may be multi-tube encapsulation.

During specific implementation, the wireless charging controller 3321 may be in controlled connection with the TX end coil assembly and the first DC-DC conversion circuit 3312. When the first housing 310 and the second housing 320 are in the first combined state, the TX end coil assembly and the RX end coil assembly may be communicatively connected through electromagnetic coupling. Therefore, when the RX end coil assembly is electrically connected to the load, the RX end coil assembly may generate the feedback signal based on the charging information of the load, and send the feedback signal to the TX end coil assembly. The TX end coil assembly may send the feedback signal to the wireless charging controller 3321, so that the wireless charging controller 3322 generates the drive signal. Further, the wireless charging controller 3321 may send the drive signal to the first DC-DC conversion circuit 3312, to adjust the first direct current output by the first DC-DC conversion circuit 3312, so as to meet a charging requirement of the load, thereby improving reliability of using the adapter 300.

Still refer to FIG. 7. In some embodiments, the wireless charging unit 332 may further include a switch circuit 3322, and the switch circuit 3322 may include a plurality of switching transistors. The switch circuit 3322 may be electrically connected between the output end of the first DC-DC conversion circuit 3312 and the TX end coil assembly. The wireless charging controller 3321 may be in controlled connection with the switch circuit 3322. The wireless charging controller 3321 may be configured to control turning-on and turning-off of the plurality of switching transistors in the switch circuit 3322, to form a current path between the first DC-DC conversion circuit 3312 and the TX end coil assembly.

In a possible example, refer to FIG. 7. The switch circuit 3322 may include a first switch bridge arm and a second switch bridge arm. The first switch bridge arm includes a switching transistor S1 and a switching transistor S2 that are connected in series, and a midpoint of the first bridge arm is a node A. The second bridge arm includes a switching transistor S3 and a switching transistor S4 that are connected in series, and a midpoint of the second bridge arm is a node B. Bridge arm connection points of the switch circuit 3322 are a node C and a node D, and the first switch bridge arm and the second switch bridge arm may be connected in parallel between the node C and the node D. Specifically, the switching transistor S1 and the switching transistor S3 may be electrically connected to the node C separately. The switching transistor S2 and the switching transistor S4 may be separately connected to the node D. The node A may be electrically connected to the first end of the TX end coil assembly (namely, the upper end of the TX end coil assembly shown in FIG. 7), and the node B may be electrically connected to the second end of the TX end coil assembly (namely, the lower end of the TX end coil assembly shown in FIG. 7). The node C may be electrically connected to the output end of the first DC-DC conversion circuit 3312, and the node D may be grounded.

It may be understood that the wireless charging controller 3321 provided in this embodiment of this application may be specifically implemented via a field-programmable gate array (field-programmable gate array, FPGA), an application-specific integrated chip (application-specific integrated circuit, ASIC), a system-on-chip (system-on-chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), another integrated chip, or the like.

In some embodiments, the wireless charging unit 332 may further include a diode circuit 3323. The diode circuit 3323 may be electrically connected between the RX end coil assembly and the output interface 350. The diode circuit 3323 may be configured to rectify the second direct current output by the RX end coil assembly.

In a possible example, refer to FIG. 7. The diode circuit 3323 may include a first diode bridge arm and a second diode bridge arm. The first diode bridge arm includes a diode D1 and a diode D2 that are connected in series, and a midpoint of the first diode bridge arm is a node H. The second diode bridge arm includes a diode D3 and a diode D4 that are connected in series, and a midpoint of the second diode bridge arm is a node E. Bridge arm connection points of the diode circuit 3323 are a node F and a node G, and the first diode bridge arm and the second diode bridge arm are connected in parallel between the node F and the node G. Specifically, the diode D1 and the diode D3 may be electrically connected to the node F separately, and the diode D2 and the diode D4 may be connected to the node G separately. The node H may be electrically connected to a first end of the RX end coil assembly (namely, an upper end of the RX end coil assembly shown in FIG. 7), and the node E may be electrically connected to a second end of the RX end coil assembly (namely, a lower end of the RX end coil assembly shown in FIG. 7), the node F and the node G may be electrically connected to the output interface 350.

In some embodiments, refer to FIG. 7. An output capacitor C1 may be further electrically connected between the diode circuit 3323 and the output interface 350. A first end of the output capacitor C1 (namely, an upper end of the output capacitor C1 shown in FIG. 7) may be electrically connected to the node F of the diode circuit 3323, and a second end of the output capacitor C1 (namely, a lower end of the output capacitor C1 shown in FIG. 7) may be electrically connected to the node G of the diode circuit 3323. The output capacitor C1 may rectify and filter a direct current output by the diode circuit 3323, so that a current and a voltage of a direct current transmitted by the diode circuit 3323 to the load are stabler and smoother.

Still refer to FIG. 7. In some embodiments, the charging module 340 may further include an electromagnetic interference (electromagnetic interference) EMI filter circuit 333. An input end of the EMI filter circuit 333 may be electrically connected to the input interface 340, and an output end of the EMI filter circuit may be electrically connected to the input end of the rectifier unit 331, for example, may be electrically connected to the input end of the rectifier conversion circuit 3311. The EMI filter circuit 333 may be configured to filter the alternating current transmitted to the rectifier unit 331.

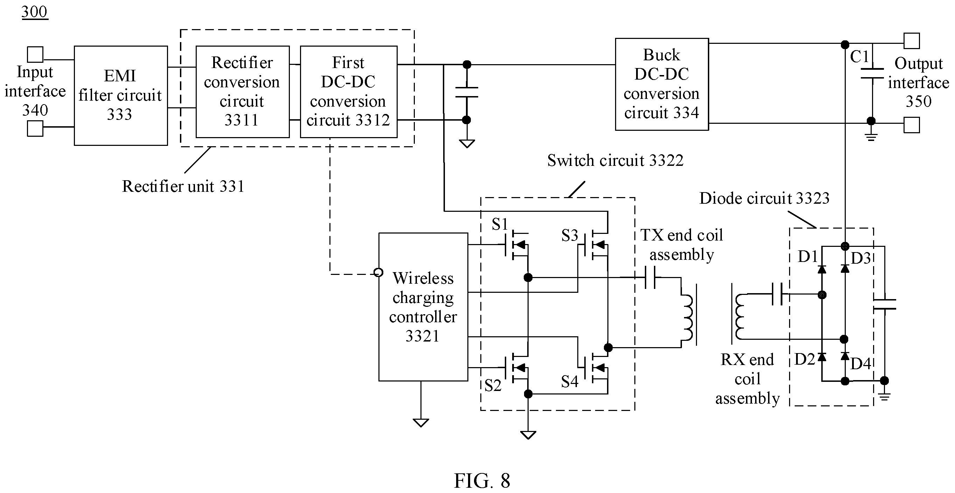

FIG. 8 is a diagram of a specific example of a charging module 330 inside another adapter 300 according to an embodiment of this application.

It should be understood that the adapter 300 shown in FIG. 8 may include most technical features of the adapter 300 shown in FIG. 7. The following mainly describes a difference between the two adapters, and most same content of the two adapters is not described again.

Refer to FIG. 8. In some embodiments, the charging module 330 may further include a buck DC-DC conversion circuit 334. An input end of the buck DC-DC conversion circuit 334 may be electrically connected to an output end of a rectifier unit 332, for example, may be electrically connected to an output end of a DC-DC conversion circuit 3312. An output end of the buck DC-DC conversion circuit 334 may be electrically connected to an output interface 350. The buck DC-DC conversion circuit 334 may be configured to: convert a first direct current output by the rectifier unit 331 into a third direct current, and transmit the third direct current to a load, where a voltage of the third direct current is less than a voltage of the first direct current.

For example, a rectifier conversion circuit 3311 may convert a 220 V alternating current input by an external power supply into a 48 V direct current, and the first DC-DC conversion circuit 3312 may convert the 48 V alternating current into a 12 V direct current, and the buck DC-DC conversion circuit 334 may further convert the 12 V direct current into a 3.8 V direct current applicable to the load, and transmit the 3.8 V direct current to the load through the output interface 350 in a wired transmission manner.

In this embodiment of this application, the buck DC-DC conversion circuit 334 is disposed. When a first housing 310 and a second housing 320 are in a second combined state, that is, when the adapter 300 cannot charge the load via an RX end coil assembly, the adapter 300 can use the buck DC-DC conversion circuit 334 to further convert the direct current output by the rectifier unit 331 into the direct current applicable to the load, and transmit the direct current to the load in the wired transmission manner, so as to charge the load, thereby helping ensure reliability of using the adapter 300. In addition, when the first housing 310 and the second housing 320 are in a first combined state, that is, when the adapter 300 is in a folded state, the adapter 300 can transmit, via both the RX end coil assembly and the buck DC-DC conversion circuit 334, the direct current output by the rectifier unit 331 to the load, so that charging power of the adapter 300 can be increased, and the adapter 300 can meet a requirement for high charging power.

It may be understood that, depending on an actual production and design requirement, the buck DC-DC conversion circuit 334 may be located in the first housing 310, or located in the second housing 320, or a part of the buck DC-DC conversion circuit 334 may be located between the first housing 310 and the second housing 320.

The following further describes a specific disposition position of the buck DC-DC conversion circuit 334 in the adapter 300 with reference to the accompanying drawings.

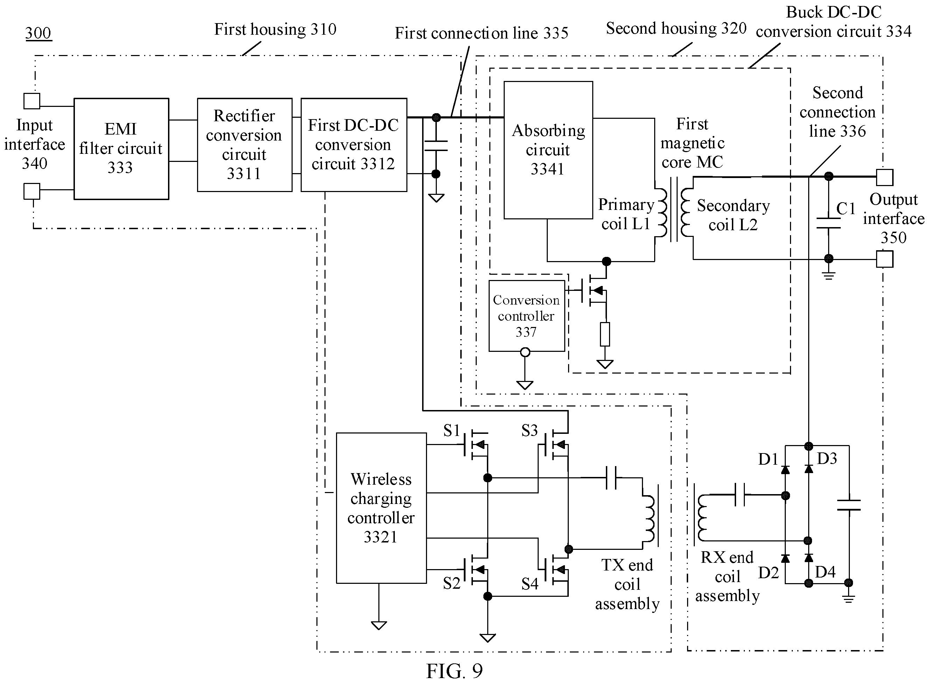

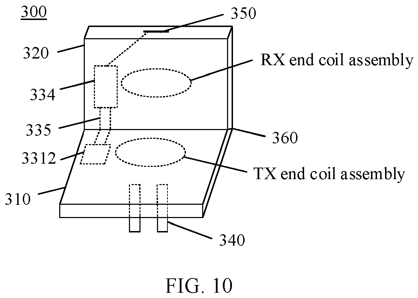

FIG. 9 is a diagram of a specific example of a charging module 330 inside an adapter 300 according to an embodiment of this application. FIG. 10 is a diagram of a possible product form of the adapter 300 shown in FIG. 9 according to an embodiment of this application.

It should be understood that the adapter shown in FIG. 9 includes most technical features of the adapter 300 shown in FIG. 8. The following mainly describes a difference between the two adapters, and most same content of the two adapters is not described again.

With reference to FIG. 9 and FIG. 10, in some embodiments, a buck DC-DC conversion circuit 334 may be disposed in a second housing 320. The charging module 340 may further include a first connection line 335 and a second connection line 336. The buck DC-DC conversion circuit 334 may be electrically connected to an output end of a rectifier unit 332 through the first connection line 335, and is electrically connected to an output interface through the second connection line 336.

Specifically, a first end of the first connection line 335 may be located in a first housing 310, and is electrically connected to the output end of the rectifier unit 331, for example, electrically connected to an output end of a first DC-DC conversion circuit 3311. A second end of the first connection line 335 may penetrate out of the first housing 310, extend into the second housing 320 by bypassing a connection mechanism 360, and be electrically connected to an input end of the buck DC-DC conversion circuit 334. A first end and a second end of the second connection line 336 may be located in the second housing 320, and are electrically connected to an output end of the buck DC-DC conversion circuit 334 and the output interface 350 respectively. The first connection line 335 and the second connection line 336 may be connection lines that can transmit an electrical signal. For example, the first connection line 335 and the second connection line 336 may be cables.

For example, the buck DC-DC conversion circuit 334 may include a transformer and a plurality of switches (not shown in the figure). The transformer may include a primary coil L1, a secondary coil L2, and a first magnetic core (magnetic core, MC). The primary coil L1 and the secondary coil L2 may be wound around the first magnetic core MC. In other words, the primary coil L1 and the secondary coil L2 are magnetically coupled through the first magnetic core MC. A first end of the primary coil L1 (namely, an upper end of the primary coil L1 shown in FIG. 9) may be electrically connected to the second end of the first connection line 335, and a first end of the secondary coil L2 (namely, an upper end of the secondary coil L2 shown in FIG. 9) may be electrically connected to the first end of the second connection line 336, and the second end of the second connection line 336 may be electrically connected to the output interface 350. The primary coil L1 and the secondary coil L2 may be configured to: step down, through electromagnetic induction, a voltage of a first direct current output by the rectifier unit 331, to obtain a third direct current, and transmit the third direct current to a load. The plurality of switches may be electrically connected to the primary coil L1 and the secondary coil L2, to form a primary circuit and a secondary circuit.

In some embodiments, the buck DC-DC conversion circuit 334 may further include an absorbing circuit 3341. An input end of the absorbing circuit 3341 may be electrically connected to the second end of the first connection line 335, and an output end of the absorbing circuit 3341 may be electrically connected to the first end of the primary coil L1 (namely, the upper end of the primary coil L1 shown in FIG. 9). The absorbing circuit 3341 may be configured to absorb a peak voltage generated when the switch in the buck DC-DC conversion circuit 334 is instantaneously connected or disconnected, to avoid damage to the switch, so as to ensure normal operation of the buck DC-DC conversion circuit 334. For example, the absorbing circuit 3341 may include a resistor, a capacitor, and a diode.

In some embodiments, as shown in FIG. 9, the charging module 330 may further include a conversion controller 337, and the conversion controller 337 may be disposed in the second housing 320. The conversion controller 337 may be configured to control connection of the plurality of switches in the buck DC-DC conversion circuit 334, to ensure that the third direct current output by the secondary coil L2 to the load meets charging information of the load.

For related descriptions of the conversion controller 337, refer to the related parts of the wireless charging controller 3321. Details are not described herein again.

It may be understood that, that the third direct current meets the charging information of the load may mean that both a peak voltage/average voltage and a peak current/average current of the third direct current meet requirements of the load for a charging voltage and a charging current when the load is charged.

In this embodiment of this application, the buck DC-DC conversion circuit 334 may be disposed in the second housing 320 together with an RX end coil assembly, and is electrically connected to the rectifier unit 331 in the first housing 310 through the first connection line 335. This helps make full use of space in the second housing 320, and a structure design is simple and compact, thereby facilitating miniaturization of the adapter 300.

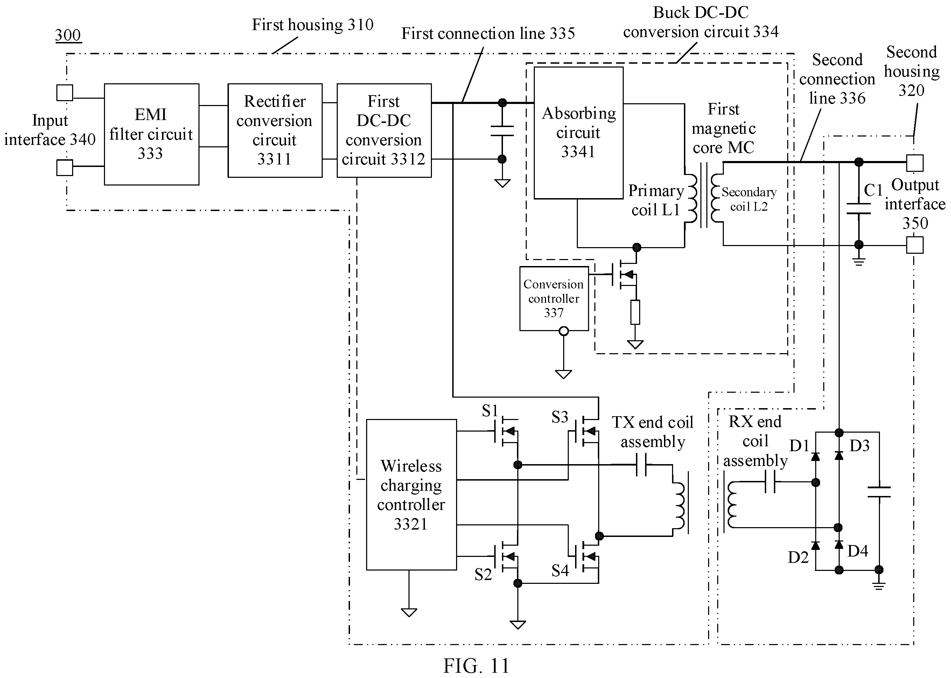

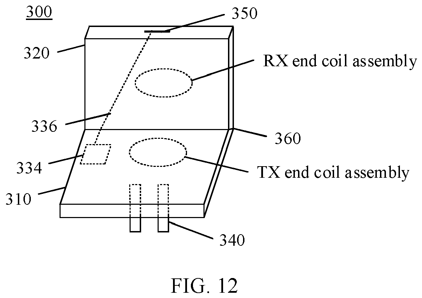

FIG. 11 is a diagram of a specific example of a charging module 330 inside an adapter 300 according to an embodiment of this application. FIG. 12 is a diagram of a possible product form of the adapter 300 shown in FIG. 11 according to an embodiment of this application.

With reference to FIG. 11 and FIG. 12, a buck DC-DC conversion circuit 334 may be disposed in a first housing 310. Both a first end and a second end of a first connection line 335 may be located in the first housing 310, and are electrically connected to an output end of a DC-DC conversion circuit 3312 and an input end of the buck DC-DC conversion circuit 334 respectively. A first end of a second connection line 336 may be located in the first housing 310, and is electrically connected to an output end of the buck DC-DC conversion circuit 334. A second end of the second connection line 336 may be located in a second housing 320, and is configured to electrically connect to a load.

Specifically, the first end of the second connection line 336 may be electrically connected to a first end of a secondary coil L2 (namely, an upper end of the secondary coil L2 shown in FIG. 11) in the buck DC-DC conversion circuit 334. The second end of the second connection line 336 may penetrate out of the first housing 310, extend into the second housing 320 by bypassing a connection mechanism 360, and be electrically connected to an output interface 350.

In this embodiment of this application, the buck DC-DC conversion circuit 334 may be disposed in the first housing 310 together with a TX end coil assembly, and is electrically connected to the output interface 350 on the second housing 310 through the second connection line 336, so as to implement an electrical connection between the buck DC-DC conversion circuit 334 and the load. This helps make full use of space in the first housing 310, and a structure design is simple and compact, thereby facilitating miniaturization of the adapter 300.

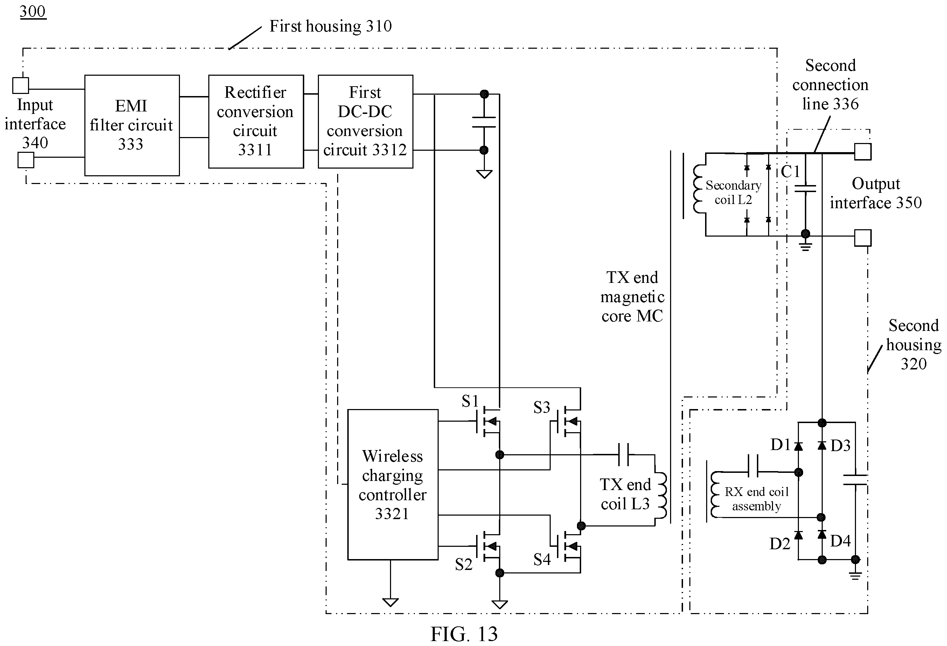

FIG. 13 is a diagram of a specific example of a charging module 330 inside an adapter 300 according to an embodiment of this application.

Different from the embodiment shown in FIG. 11, in the embodiment shown in FIG. 13, when a buck DC-DC conversion circuit 334 is disposed in a first housing 310, only a secondary coil L2 of a transformer may be disposed in the buck DC-DC conversion circuit 334, a TX end coil assembly in a wireless charging unit 332 is used as a primary coil L1 and a first magnetic core MC of the transformer.

Specifically, the TX end coil assembly may include a TX end magnetic core MC and a TX end coil L3, and the buck DC-DC conversion circuit 334 may include the secondary coil L2. The TX end coil L3 and the secondary coil L2 are wound around the TX end magnetic core MC. In other words, the TX end coil L3 and the secondary coil L2 are magnetically coupled through the TX end magnetic core MC. A first end of the TX end coil L3 (namely, an upper end of the TX end coil L3 shown in FIG. 13) may be electrically connected to an output end of a rectifier unit 332, and a first end of the secondary coil L2 (namely, an upper end of the secondary coil L2 shown in FIG. 13) may be electrically connected to a first end of a second connection line 336, and a second end of the second connection line 336 may extend into a second housing 320, and is electrically connected to an output interface 350.

The TX end coil L3 and the secondary coil L2 may be configured to: step down, through electromagnetic induction, a voltage of a first direct current output by the rectifier unit 332, to obtain a third direct current, and then transmit the third direct current to a load.

In this embodiment of this application, the TX end coil L3 is used as a primary coil L1 in the buck DC-DC conversion circuit 334, so that the TX end coil L3 is coupled to the secondary coil L2 in the buck DC-DC conversion circuit 334 via the TX end magnetic core, to form the transformer in the buck DC-DC conversion circuit. In this way, no independent primary coil L1 may be disposed in the buck DC-DC conversion circuit 334. This helps reduce a quantity of electronic parts and components in the adapter 300, and further facilitates miniaturization of the adapter 300.

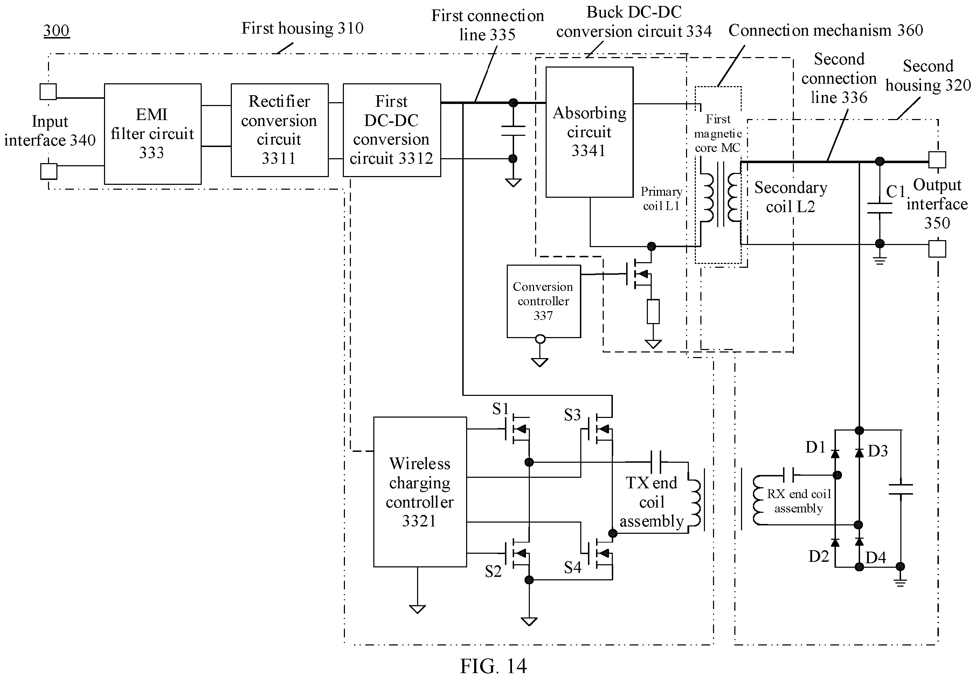

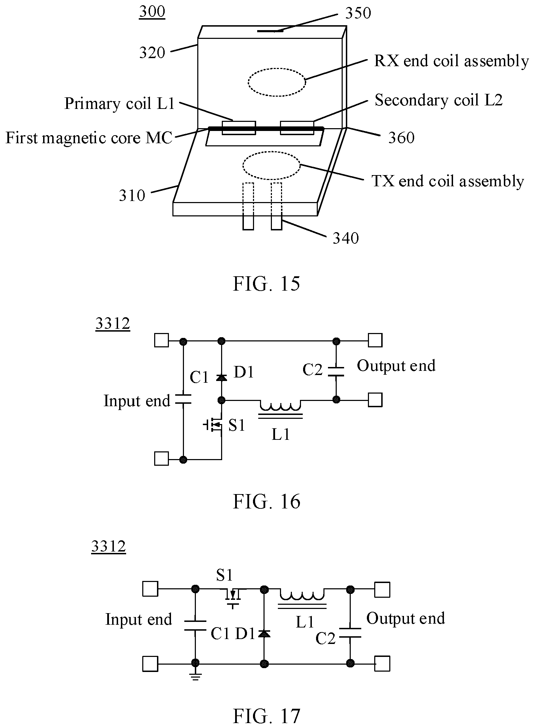

FIG. 14 is a diagram of a specific example of a charging module 330 inside an adapter 300 according to an embodiment of this application. FIG. 15 is a diagram of a possible product form of the adapter 300 shown in FIG. 14 according to an embodiment of this application.

With reference to FIG. 14 and FIG. 15, a partial structure of a buck DC-DC conversion circuit 334 may be disposed at a connection mechanism 360 between a first housing 310 and a second housing 320.

Specifically, in the buck DC-DC conversion circuit 334, a first magnetic core MC of a transformer may be disposed at the connection mechanism 360. For example, when the connection mechanism 360 is a rotating shaft mechanism, a rotating shaft in the rotating shaft mechanism may serve as the first magnetic core MC. A primary coil L1 and a secondary coil L2 of the transformer may be wound around the rotating shaft, so as to be magnetically coupled through the rotating shaft. For example, as shown in FIG. 15, the first magnetic core MC may be closed through internal space of the first housing 310, or the first magnetic core MC may be closed through internal space of the second housing 320.

In an example, a first end of the primary coil L1 (namely, an upper end of the primary coil L1 shown in FIG. 14) may extend into the first housing 310, and is electrically connected to an output end of a rectifier unit 331 through a first connection line 335, a first end of the secondary coil L2 (namely, an upper end of the secondary coil L2 shown in FIG. 14) may extend into the second housing 320, and is electrically connected to an output interface 350 through a second connection line 336.

In another example, both a first end of the primary coil L1 and a first end of the secondary coil L2 may extend into the second housing 320. In this case, a first end of a first connection line 335 may be located in the first housing 310, and is electrically connected to an output end of a rectifier unit 331. A second end of the first connection line 335 may be located in the second housing 320, and is electrically connected to the first end of the primary coil L1. For specific descriptions, refer to the embodiments shown in FIG. 9 and FIG. 10. Details are not described herein again.

In still another example, both a first end of the primary coil L1 and a first end of the secondary coil L2 may extend into the first housing 310. In this case, a first end of a second connection line 336 may be located in the first housing 310, and is electrically connected to the first end of the secondary coil L2. A second end of the second connection line 336 may be located in the second housing 320, and is electrically connected to an output interface 350. For specific descriptions, refer to the embodiments shown in FIG. 11 and FIG. 12. Details are not described herein again.

In this embodiment of this application, the magnetic core of the buck DC-DC conversion circuit 334 is disposed at the connection mechanism 360, to make full use of space at the connection mechanism 360, and reduce space occupied by the magnetic core in the first housing 310 or the second housing 320. In this way, the first housing 310 or the second housing 320 can accommodate more electronic parts and components, to improve charging power of the adapter 300.

The following describes specific examples of the first DC-DC conversion circuit 3312 provided in embodiments of this application with reference to the accompanying drawings.

FIG. 16 to FIG. 19 are diagrams of the specific examples of the first DC-DC conversion circuit 3312 according to embodiments of this application.

With reference to FIG. 16 to FIG. 18, the first DC-DC conversion circuit 3312 may include a capacitor C1, a capacitor C2, a diode D1, a switching transistor S1, and an inductor L1, so as to form a buck/boost circuit, a buck circuit, and a boost circuit.

Specifically, refer to FIG. 16. The first DC-DC conversion circuit 3312 may be a buck/boost circuit, and the buck/boost circuit may step up or step down a first direct current output by a rectifier circuit 3311. In other words, when the first DC-DC conversion circuit 3312 converts a fourth direct current output by the rectifier circuit 3311 into the first direct current, a voltage value of the first direct current may be greater than a voltage value of the fourth direct current, or a voltage value of the first direct current may be less than a voltage value of the fourth direct current.

Refer to FIG. 17. The first DC-DC conversion circuit 3312 may be a buck circuit, and the first DC-DC conversion circuit 3312 may step down a first direct current output by a rectifier circuit 3311. In other words, when the first DC-DC conversion circuit 3312 converts a fourth direct current output by the rectifier circuit 3311 into the first direct current, a voltage value of the first direct current may be less than a voltage value of the fourth direct current.

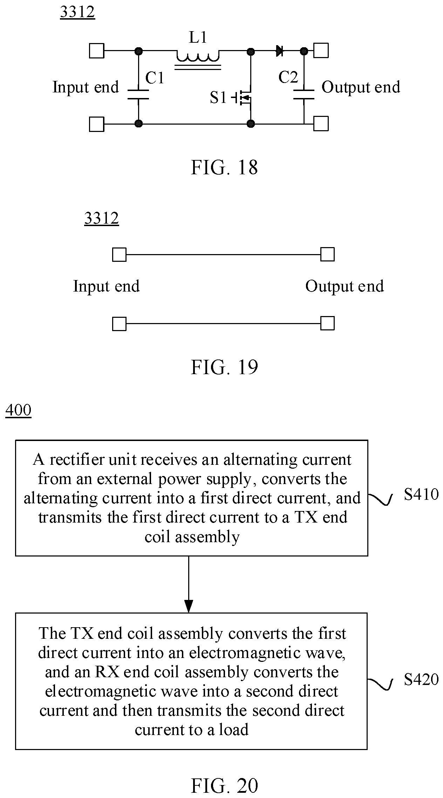

Refer to FIG. 18. The first DC-DC conversion circuit 3312 may be a boost circuit, and the first DC-DC conversion circuit 3312 may step up a first direct current output by a rectifier circuit 3311. In other words, when the first DC-DC conversion circuit 3312 converts a fourth direct current output by the rectifier circuit 3311 into the first direct current, a voltage value of the first direct current may be greater than a voltage value of the fourth direct current.

Different from the embodiments shown in FIG. 16 to FIG. 18, as shown in FIG. 19, an output end and an output end of the first DC-DC conversion circuit 3312 may be directly electrically connected through a conducting wire. In other words, when the first DC-DC conversion circuit 3312 converts a fourth direct current output by a rectifier circuit 3311 into a first direct current, a voltage value of the first direct current may be equal to a voltage value of the fourth direct current.

FIG. 20 is a schematic flowchart of a charging method 400 according to an embodiment of this application. The charging method 400 may be applied to the foregoing adapter 300.

The adapter 300 may include a first housing 310, a second housing 320, and a charging module 330. The charging module 330 may include a rectifier unit 331 and a wireless charging unit 332. The wireless charging unit 332 may include a TX end coil assembly and an RX end coil assembly. The first housing 310 and the second housing 320 are rotatably connected. The rectifier unit 331 and the TX end coil assembly may be disposed in the first housing 310, and an output end of the rectifier unit 331 may be electrically connected to the TX end coil assembly. The RX end coil assembly may be disposed in the second housing 320.

As shown in FIG. 20, the charging method 400 may include the following steps.

S410: The rectifier unit 331 may receive an alternating current from an external power supply, convert the alternating current into a first direct current, and transmit the first direct current to the TX end coil assembly.

In some embodiments, the rectifier unit 331 may include a rectifier conversion circuit 3311 and a first DC-DC conversion circuit 3312. An input end of the rectifier conversion circuit 3311 may be electrically connected to an input interface 340. An output end of the rectifier conversion circuit 3311 may be electrically connected to an input end of the first DC-DC conversion circuit 3312, and an output end of the first DC-DC conversion circuit 3312 may be electrically connected to the TX end coil assembly. In this case, step S410 may include:
the rectifier conversion circuit 3311 may receive the alternating current from the external power supply, convert the alternating current into a fourth direct current, and transmit the fourth direct current to the first DC-DC conversion circuit 3312; and
the first DC-DC conversion circuit 3312 may convert the fourth direct current into the first direct current, and transmit the first direct current to the TX end coil assembly.

S420: The TX end coil assembly may convert the first direct current into an electromagnetic wave, and the RX end coil assembly may convert the electromagnetic wave into a second direct current and then transmit the second direct current to a load, to charge the load.

Specifically, when the first housing 310 and the second housing 320 are in a first combined state, a coupled electromagnetic field may be generated in spacing between the TX end coil assembly and the RX end coil assembly, so that the adapter 300 can transmit, in a folded state in a wireless transmission manner, the direct current output by the rectifier unit 331 to the RX end coil assembly via the TX end coil assembly, to charge the load via the RX end coil assembly. In some embodiments, the first DC-DC conversion circuit 3312 may include a plurality of switches, the wireless charging unit 332 may further include a wireless charging controller 3321, and the wireless charging controller 3321 may be disposed in the first housing 310. In this case, the method 400 may further include:
the wireless charging controller 3321 may receive a feedback signal sent by the RX end coil assembly, where the feedback signal may indicate charging information of the load; and
the wireless charging controller 3322 may further determine a drive signal based on the feedback signal, where the drive signal may be used to control turning-on and turning-off of the plurality of switches in the first DC-DC conversion circuit 3312, so that the first DC-DC conversion circuit 3312 outputs the first direct current based on the charging information.

In some embodiments, the charging module 330 may further include a buck DC-DC conversion circuit 334. An input end of the buck DC-DC conversion circuit 334 may be electrically connected to the output end of the rectifier unit 332. In this case, the method 400 may further include:
the buck DC-DC conversion circuit 334 may convert the first direct current output by the rectifier unit 332 into a third direct current, and then transmit the third direct current to the load, to charge the load. A voltage of the third direct current is less than a voltage of the first direct current.

For a part that is not described in detail in the charging method 400, refer to the related descriptions of the adapter 300 in FIG. 3 to FIG. 19. Details are not described herein again.

In this embodiment of this application, the adapter 300 transmits, in the folded state in the wireless transmission manner via the TX end coil assembly and the RX end coil assembly that are disposed in the two housings respectively, the direct current output by the rectifier unit 331 to the end coil assembly via the TX end coil assembly, to charge the load via the RX end coil assembly. This can reduce space occupied when the adapter 300 is used, thereby facilitating miniaturization of the adapter 300. In addition, the TX end coil assembly and the RX end coil assembly are independently disposed in the two housings respectively, so that impact, caused by housing folding, on sizes of the TX end coil assembly and the RX end coil assembly can be avoided, to ensure output power of the adapter 300. This helps the adapter 300 to meet a requirement for high charging power.

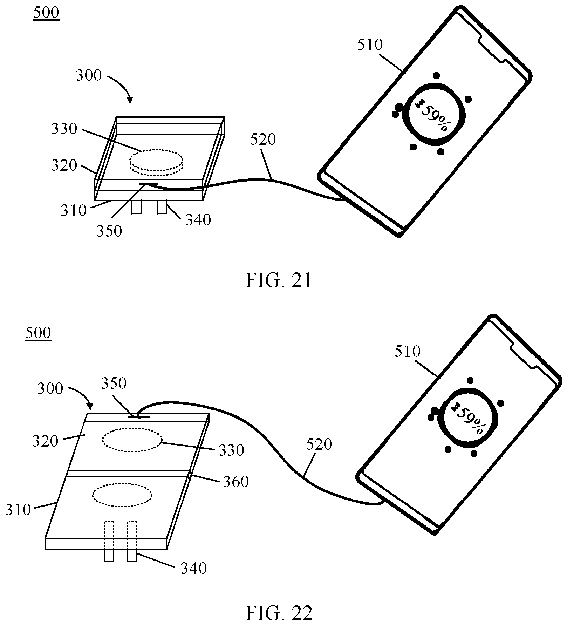

FIG. 21 is a diagram of a structure of a charging system 500 according to an embodiment of this application.

As shown in FIG. 21, the charging system 500 may include the adapter 300 described in the foregoing embodiments and a load 510. An output interface 350 of the adapter 300 may be electrically connected to the load 510 through a power cable 520.

With reference to FIG. 4, FIG. 7, and FIG. 21, the adapter 300 is in a folded state, and a first housing 310 and a second housing 320 of the adapter 300 are in a first combined state. In this case, in the charging system 500, the adapter 300 may transmit, through the power cable 520, a direct current to the load 510 via an RX end coil assembly in a charging module 330, to charge the load 510. Alternatively, the adapter 300 may transmit, through the power cable 520, a direct current to the load 510 via a buck DC-DC conversion circuit 334 in a charging module 330, to charge the load 510.

FIG. 22 is a diagram of a structure of another charging system 500 according to an embodiment of this application.

With reference to FIG. 6, FIG. 8, and FIG. 22, an adapter 300 is in an unfolded state, and a first housing 310 and a second housing 320 of the adapter 300 are in a second combined state. In this case, in the charging system 500, the adapter 300 may transmit, through a power cable 520, a direct current to a load 510 via a buck DC-DC conversion circuit 334 in a charging module 330, to charge the load 510.

For a part that is not described in detail in the charging system 500, refer to the embodiment shown in FIG. 1. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An adapter, comprising a first housing, a second housing, and a charging module, wherein
the first housing and the second housing are rotatably connected;
the charging module comprises a rectifier unit and a wireless charging unit, the rectifier unit is disposed in the first housing, the wireless charging unit comprises a transmit end coil assembly and a receive end coil assembly, the transmit end coil assembly is disposed in the first housing, the transmit end coil assembly is electrically connected to an output end of the rectifier unit, and the receive end coil assembly is disposed in the second housing;
the rectifier unit is configured to: receive an alternating current from an external power supply, convert the alternating current into a first direct current, and transmit the first direct current to the transmit end coil assembly; and
the transmit end coil assembly is configured to convert the first direct current into an electromagnetic wave, and the receive end coil assembly is configured to: convert the electromagnetic wave into a second direct current and transmit the second direct current to a load.

2. The adapter according to claim 1, wherein the charging module further comprises a buck direct current-direct current DC-DC conversion circuit, and an input end of the buck DC-DC conversion circuit is electrically connected to the output end of the rectifier unit; and
the buck DC-DC conversion circuit is configured to: convert the first direct current output by the rectifier unit into a third direct current, and transmit the third direct current to the load, wherein a voltage of the third direct current is less than a voltage of the first direct current.

3. The adapter according to claim 2, wherein the buck DC-DC conversion circuit is disposed in the second housing; and
the adapter further comprises a first connection line, wherein a first end of the first connection line is located in the first housing, the first end of the first connection line is electrically connected to the output end of the rectifier unit, a second end of the first connection line is located in the second housing, and the second end of the first connection line is electrically connected to the input end of the buck DC-DC conversion circuit.

4. The adapter according to claim 2, wherein the buck DC-DC conversion circuit is disposed in the first housing; and
the adapter further comprises a second connection line, wherein a first end of the second connection line is located in the first housing, the first end of the second connection line is electrically connected to an output end of the buck DC-DC conversion circuit, a second end of the second connection line is located in the second housing, and the second end of the second connection line is configured to electrically connect to the load.

5. The adapter according to claim 4, wherein the transmit end coil assembly comprises a transmit end coil and a transmit end magnetic core, and the buck DC-DC conversion circuit comprises a secondary coil, wherein
the transmit end coil and the secondary coil are wound around the transmit end magnetic core, the transmit end coil is electrically connected to the output end of the rectifier unit, and the secondary coil is electrically connected to the first end of the second connection line; and
the transmit end coil and the secondary coil are configured to: step down, through electromagnetic induction, the voltage of the first direct current output by the rectifier unit to obtain the third direct current, and transmit the third direct current to the load.

6. The adapter according to any one of claims 2 to 4, wherein the adapter further comprises a connection mechanism;
the connection mechanism is located between the first housing and the second housing, and the connection mechanism is rotatably connected to the first housing and the second housing separately;
the buck DC-DC conversion circuit comprises a primary coil, the secondary coil, and a first magnetic core, the first magnetic core is disposed at the connection mechanism, the primary coil and the secondary coil are wound around the first magnetic core, the primary coil is electrically connected to the output end of the rectifier unit, and the secondary coil is configured to electrically connect to the load; and
the primary coil and the secondary coil are configured to: step down, through electromagnetic induction, the voltage of the first direct current output by the rectifier unit to obtain the third direct current, and transmit the third direct current to the load.

7. The adapter according to any one of claims 1 to 6, wherein the adapter further comprises an input interface and an output interface;
the input interface is disposed on the first housing, the input interface is electrically connected to an input end of the rectifier unit, and the input interface is configured to electrically connect to the external power supply; and
the output interface is disposed on the second housing, the output interface is electrically connected to the receive end coil assembly, and the output interface is configured to electrically connect to the load.

8. The adapter according to any one of claims 1 to 7, wherein the rectifier unit comprises a rectifier conversion circuit and a first DC-DC conversion circuit;
the output end of the rectifier unit is electrically connected to an input end of the first DC-DC conversion circuit, and an output end of the first DC-DC conversion circuit is electrically connected to the transmit end coil assembly;
the rectifier conversion circuit is configured to: receive the alternating current from the external power supply, convert the alternating current into a fourth direct current, and transmit the fourth direct current to the first DC-DC conversion circuit; and
the first DC-DC conversion circuit is configured to: convert the fourth direct current into the first direct current, and transmit the first direct current to the transmit end coil assembly.

9. The adapter according to claim 8, wherein the first DC-DC conversion circuit comprises a plurality of switches, and the wireless charging unit further comprises a wireless charging controller, wherein
the wireless charging controller is disposed in the first housing, and the wireless charging controller is configured to:
receive a feedback signal sent by the receive end coil assembly, wherein the feedback signal indicates charging information of the load; and
determine a drive signal based on the feedback signal, wherein the drive signal is used to control turning-on and turning-off of the plurality of switches, so that the first DC-DC conversion circuit outputs the first direct current based on the charging information.

10. A charging system, comprising an adapter and a load, wherein
the adapter comprises a first housing, a second housing, and a charging module;
the first housing and the second housing are rotatably connected;
the charging module comprises a rectifier unit and a wireless charging unit, the rectifier unit is disposed in the first housing, the wireless charging unit comprises a transmit end coil assembly and a receive end coil assembly, the transmit end coil assembly is disposed in the first housing, the transmit end coil assembly is electrically connected to an output end of the rectifier unit, the receive end coil assembly is disposed in the second housing, and the receive end coil assembly is electrically connected to the load;
the rectifier unit is configured to: receive an alternating current from an external power supply, convert the alternating current into a first direct current, and transmit the first direct current to the transmit end coil assembly; and
the transmit end coil assembly is configured to convert the first direct current into an electromagnetic wave, and the receive end coil assembly is configured to: convert the electromagnetic wave into a second direct current and transmit the second direct current to the load.

11. The charging system according to claim 10, wherein the charging module further comprises a buck direct current-direct current DC-DC conversion circuit, an input end of the buck DC-DC conversion circuit is electrically connected to the output end of the rectifier unit, and an output end of the buck DC-DC conversion circuit is electrically connected to the load; and
the buck DC-DC conversion circuit is configured to: convert the first direct current output by the rectifier unit into a third direct current, and transmit the third direct current to the load, wherein a voltage of the third direct current is less than a voltage of the first direct current.

12. The charging system according to claim 10 or 11, wherein the rectifier unit comprises a rectifier conversion circuit and a first DC-DC conversion circuit;
the output end of the rectifier unit is electrically connected to an input end of the first DC-DC conversion circuit, and an output end of the first DC-DC conversion circuit is electrically connected to the transmit end coil assembly;
the rectifier conversion circuit is configured to: receive the alternating current from the external power supply, convert the alternating current into a fourth direct current, and transmit the fourth direct current to the first DC-DC conversion circuit; and
the first DC-DC conversion circuit is configured to: convert the fourth direct current into the first direct current, and transmit the first direct current to the transmit end coil assembly.

13. The charging system according to claim 12, wherein the first DC-DC conversion circuit comprises a plurality of switches, and the wireless charging unit further comprises a wireless charging controller, wherein
the wireless charging controller is disposed in the first housing, and the wireless charging controller is configured to:
receive a feedback signal sent by the receive end coil assembly, wherein the feedback signal indicates charging information of the load; and
determine a drive signal based on the feedback signal, wherein the drive signal is used to control turning-on and turning-off of the plurality of switches, so that the first DC-DC conversion circuit outputs the first direct current based on the charging information.

14. A charging method, applied to an adapter, wherein the adapter comprises a first housing, a second housing, and a charging module, wherein the charging module comprises a rectifier unit and a wireless charging unit, and the wireless charging unit comprises a transmit end coil assembly and a receive end coil assembly; and
the first housing and the second housing are rotatably connected, the rectifier unit and the transmit end coil assembly are disposed in the first housing, an output end of the rectifier unit is electrically connected to the transmit end coil assembly, and the receive end coil assembly is disposed in the second housing; and
the charging method comprises:
receiving, by the rectifier unit, an alternating current from an external power supply, converting the alternating current into a first direct current, and transmitting the first direct current to the transmit end coil assembly; and
converting, by the transmit end coil assembly, the first direct current into an electromagnetic wave, and converting, by the receive end coil assembly, the electromagnetic wave into a second direct current, and transmitting the second direct current to a load.

15. The charging method according to claim 14, wherein the charging module further comprises a buck direct current-direct current DC-DC conversion circuit, and an input end of the buck DC-DC conversion circuit is electrically connected to the output end of the rectifier unit; and
the charging method further comprises:
converting, by the buck DC-DC conversion circuit, the first direct current output by the rectifier unit into a third direct current, and transmitting the third direct current to the load, wherein a voltage of the third direct current is less than a voltage of the first direct current.

16. The charging method according to claim 14 or 15, wherein the rectifier unit comprises a rectifier conversion circuit and a first DC-DC conversion circuit, the output end of the rectifier unit is electrically connected to an input end of the first DC-DC conversion circuit, and an output end of the first DC-DC conversion circuit is electrically connected to the transmit end coil assembly; and
the receiving, by the rectifier unit, an alternating current from an external power supply, converting the alternating current into a first direct current, and transmitting the first direct current to the transmit end coil assembly comprises:
receiving, by the rectifier conversion circuit, the alternating current from the external power supply, converting the alternating current into a fourth direct current, and transmitting the fourth direct current to the first DC-DC conversion circuit; and
converting, by the first DC-DC conversion circuit, the fourth direct current into the first direct current, and transmitting the first direct current to the transmit end coil assembly.

17. The charging method according to claim 16, wherein the first DC-DC conversion circuit comprises a plurality of switches, the wireless charging unit further comprises a wireless charging controller, and the wireless charging controller is disposed in the first housing; and
the charging method further comprises:
receiving, by the wireless charging controller, a feedback signal sent by the receive end coil assembly, wherein the feedback signal indicates charging information of the load; and
determining, by the wireless charging controller, a drive signal based on the feedback signal, wherein the drive signal is used to control turning-on and turning-off of the plurality of switches, so that the first DC-DC conversion circuit outputs the first direct current based on the charging information.
